# EUROPEAN PATENT SPECIFICATION

(11) **EP 4 470 760 B1**
(45) Date of publication and mention of the grant of the patent: **01.07.2026**
(21) Application number: 24174460.6
(22) Date of filing: 07.05.2024
(51) Int. Cl.: B29C 65/08, B29C 65/74, B65B 9/20, B65B 51/22, B65B 51/30, B29L 31/00

(54) **ULTRASONIC SEALING SYSTEM AND ANVIL THEREOF**
ULTRASCHALL-VERSIEGELUNGSSYSTEM UND AMBOSS DAFÜR
SYSTÈME DE SCELLEMENT PAR ULTRASONS ET ENCLUME ASSOCIÉE

(30) Priority: 12.05.2023 EP 23173165
(43) Date of publication of application: 04.12.2024
(73) Proprietor: Tetra Laval Holdings & Finance S.A., 1009 Pully (CH)
(72) Inventor: Råbe, Magnus, 22186 Lund (SE); Palmquist, Patrik, 22186 Lund (SE); Karlsson, Per, 22186 Lund (SE)
(74) Representative: Tetra Pak Patent Attorneys

(56) References cited:
- EP-A1- 1 241 098
- EP-A1- 3 260 383
- EP-A2- 1 066 951
- WO-A1-2006/041377
- US-A1- 2019 202 587

## Description

### Technical field

The present invention relates to the field of packaging technology. More particularly, it is related to an ultrasonic sealing system and anvil thereof, as well as a method for transversal sealing a tube of packaging material using said ultrasonic sealing system.

### Background of the invention

Ultrasonic sealing technology, sometimes referred to as ultrasonic welding technology, has for many years been widely used within the food packaging industry for sealing carton packages. The ultrasonic sealing is formed by applying a pressure and generating heat by inducing ultrasonic oscillations in to the area to be sealed. This is commonly achieved by pressing the packaging material between an oscillating transducer and an anvil. The oscillations generates heat in the area which in turn causes a plastic of the packaging material to melt. The applied pressure fuses together the packaging material so as to form an hermetic seal. The generated heat is dependent on the amount of applied pressure, the distribution of the applied pressure and the oscillation amplitude. Together with further parameters, such as a sealing time and sealing energy, these need to be controlled in order to achieve a desirable seal.

An advantage with using the ultrasonic sealing technology compared to induction sealing technology, sometimes referred to as induction heating technology, is that the ultrasonic sealing technology does not require an electrically conductive material in the packaging material, such as an Aluminum foil. Thus, making the packaging material more cost-efficient.

In roll-fed packaging machines, the ultrasonic sealing technology is typically used for forming transversal seals, i.e., welds in a lower part of a tube of packaging material filled with food product, such that packages can be formed. The tube is in turn formed by joining two edges of a web of packaging material by a longitudinal seal. Because of the package design, there is a region in the transversal sealing where it crosses the longitudinal sealing, sometimes referred to as the TS-LS cross.

Due to the TS-LS cross, the sealing system used to form the transversal sealing has to be designed to handle both regions where two layer of packaging material is present, as well as a region where three layers of packaging material is present, i.e. in the TS-LS cross. This makes it difficult when wanting to control the above mentioned parameters of the sealing process. As previously mentioned, the applied pressure distribution is by itself fundamental for the sealing process and in turn, the generated heat is also directly dependent on the pressure distribution. This in combination with the fact that the oscillating transducer and fixed anvil are made of ridged materials, makes the TS-LS cross a particular challenge. Furthermore, variations in size and position of the longitudinal sealing can affect the robustness of the sealing system, making it even more challenging to design.

Any resulting defects in the transversal sealing can have severe effects on the food safety of the package. Therefore, even though there are solutions available today for handling the TS-LS cross in the ultrasonic sealing device, there is a need for further improvements. Documents EP1066951 A2, US2019/202587 A1, EP1241098 A1, WO2006/041377 A1 and EP3260383 A1 may be of interest for the present description.

In particular EP1066951A2 discloses an anvil of a ultrasonic sealing system for transversally sealing a transversal sealing section of a tube of packaging material, comprising a ridge, a release surface extending along the first axis of the anvil, and a support surface extending along the first axis of the anvil and arranged between the ridge and the release surface, wherein the section of the anvil's profile varies along the first axis of the anvil.

### Summary of the invention

The herein disclosed technology seeks to at least partly mitigate, alleviate or eliminate one or more of the above-mentioned deficiencies and disadvantages in the prior art. In particular, it is an object to provide an improved ultrasonic sealing system and anvil thereof. The present inventive concept further relates to a packaging machine comprising the ultrasonic sealing system, and a method for operating the ultrasonic sealing system.

The inventors have realized a new and improved way for ultrasonic sealing, by utilizing the fact that the heating effect in the packaging material has a non-linear relationship with the applied pressure. In general, the heating effect increases with the sealing pressure, but this has been found to only be valid up to a certain pressure level. At higher pressures, the heating effect is levelling out or is even reduced. As part of the present inventive concept, the non-linear relation between the pressure and the ultrasonic heating is used to balance the heating between the two- and three- layer regions of the tube of packaging material. At a certain combination of geometry, sealing pressure and ultrasonic amplitude, it is possible to get a uniform heating and uniform sealing result at the two- and three-layer regions.

Various aspects and embodiments of the disclosed invention are defined below and in the accompanying independent and dependent claims.

According to a first aspect, there is provided an anvil of an ultrasonic sealing system for sealing a transversal sealing section of a tube of packaging material. The transversal sealing section comprises a first transversal edge section, a longitudinal sealing, LS, section and a second transversal edge section. Said anvil comprising a ridge extending along a first axis, A1, of the anvil, a release surface extending along the first axis of the anvil, and a support surface extending along the first axis of the anvil and arranged between the ridge and the release surface. The anvil further comprises a first and a second side section, a middle section, a first transition section arranged between the first side section and the middle section, and a second transition section arranged between the middle section and the second side section. In the first and second side section, the ridge, the release surface and the support surface follows a first profile. In the middle section, the ridge, the release surface and the support surface follows a second profile. A height of the ridge and the support surface in the first profile is greater than a respective height in the second profile, and a height of the release surface in the first profile is the same as in the second profile.

The first and second transversal edge section may also be referred to as 2-layer regions. The longitudinal sealing section may be referred to as a 3-layer region.

By the wording "profile", as in the first and second profile, it is herein meant a shape and size of the ridge, the release surface and the support surface (e.g. height and width) as seen in cross-section in a direction of the first axis. I.e. a cross section of a plane perpendicular to the first axis. The first profile may be seen as a profile adapted for the 2-layer regions, while the second profile may be seen as a profile adapted for the 3-layer region.

To achieve a more balanced heating of two- and three-layer regions, a relatively high pressure is needed at the three-layer region. This can be achieved by the ridge. At the same time, the width of the ridge should be narrow to limit the needed force and limit the required ultrasonic power. This may give rise to high stress and high stress gradients in the three-layer region, which in turn may cause cracks in the packaging material negatively affecting the sealing quality and the package appearance. This effect may be coped with by introducing the support surface and the release surface. By the different heights of the ridge and support surface in the first and second profile The design of the first and second profile as defined above, may further be advantageous in achieving a balanced pressure/heating distribution.

To further improve balance the sealing between the two- and three-layer region, it should be avoided to get too much heat in the two- and three-layer region, but at the same time get sufficient heating in the transition between the two- and three-layer regions. To get sufficient sealing at the transition, it should be ensured that there is a sufficient minimum pressure in the transition at the start of the sealing pulse. This is needed to obtain heat at this transition during the whole sealing pulse, otherwise there may be an insufficient amount of heat with risks for leakage. Furthermore, the maximum pressure at the transition must not damage the packaging material, high pressure together with high pressure gradients may be particularly dangerous.

The sufficient minimum pressure and the handling of the high pressure may be achieved by using a rather high pressure in the three-layer region (i.e. by the ridge 410) and utilize the support surface to limit the pressure gradient. Since the support surface is following the ridge (i.e. when the ridge increases/decreases from one profile to another, the support surface does the same), an increased pressure will also give an increased support. In this way the damage of the packaging material can be avoided.

The position and the width of the overlap of packaging material in the longitudinal sealing is varying, but there is a part that always has three-layers and another part that always has two-layers. Therefore, the anvil 402 may be designed with two profiles, one optimized for the two-layer region and one optimized for the three layer region.

The support surface may, in the first transition section, transitions from a fourth height of the first side section to a sixth height of the middle section over the first width, W1, of the first transition section. In the second transition section, the support surface may transition from the sixth height of the middle section to the fourth height of the second side section over the second width, W2, of the second transition section. It should however be appreciated that the first and second transition section may have different widths for the transition of the ridge than for the transition of the support surface.

In an alternative formulation of the first aspect, there is provided an anvil of an ultrasonic sealing system for transversally sealing a tube of packaging material, said anvil comprising a ridge extending along a first axis, A1, of the anvil, a release surface extending along the first axis of the anvil, and a support surface extending along the first axis of the anvil and arranged between the ridge and the release surface, wherein the anvil comprises a first and a second side section, a middle section, a first transition section arranged between the first side section and the middle section, and a second transition section arranged between the middle section and the second side section, wherein, in the first and second side section, the ridge, the release surface and the support surface follows a first profile, wherein, in the middle section, the ridge, the release surface and the support surface follows a second profile, wherein a height of the ridge and the support surface in the first profile is greater than a respective height in the second profile, and a height of the release surface in the first profile is the same as in the second profile.

In the first transition section, the ridge and the support surface may transition from a respective first and second height, H1, H2, of the first side section to a respective third and fourth height, H3, H4, of the middle section over a first width, W1, of the first transition section. In the second transition section, the ridge and the support surface may transition from the respective third and fourth height, H3, H4, of the middle section to a respective fifth and sixth height, H5, H6, of the second side section over a second width, W2, of the second transition section. The first width, W1, of the first transition section may be smaller than the second width, W2, of the second transition section.

By having the first and second transition sections of different width, an asymmetric transition from the first side section, via the middle section, to the second side section is achieved. This asymmetric transition provides for an improved heat/pressure distribution over the cross section between the longitudinal and transversal sealing. In other words, a more balances heating over the 2-layer and 3-layer regions may be achieved. The longitudinal sealing is by design asymmetric by the way the packaging material is overlapped. The longitudinal sealing is commonly considered symmetric in its transition from 2 to 3 layers. However, as realized by the inventors, improvements in the forming of the transversal sealing can be achieved by taking into account that the longitudinal sealing is actually asymmetric, in that it has one non-covered edge and one covered edge of packaging material. Thus, the asymmetric shape of the anvil may be selected to compensate for the asymmetric design of the longitudinal sealing. In this way, a melted plastic material of the packaging material can be handled in a better way, and the resulting transversal seal be improved.

Even further, the asymmetric transition provides for an anvil which is more robust against variations in the position of the tube.

Even further, the proposed anvil provides for a reduction of the risk for overheating in the packaging material.

Even further, the proposed anvil facilitates a more efficient use of the sealing energy, thus requiring less power and a shorter sealing time.

The first height, H1, may the same as the fifth height, H5. The second height, H2, may be the same as the sixth height H6.

The middle section may be arranged to interact with at least the LS section of the tube during a transversal sealing state. The first and second side section may be arranged to interact with at least the first and the second transversal edge section of the tube, respectively, during the transversal sealing state.

The packaging material may comprise a paperboard layer and a plastic foil attached to the paperboard layer. The paperboard layer has the advantageous effect of being compressible, while the plastic foil (also herein referred to as plastic layer) can be melted by ultrasonic vibrations to form the transversal sealing. Thus, the packaging material may be void of Aluminum. Aluminum is otherwise commonly used when the transversal sealing is formed by sealing systems based on induction heating. Without the Aluminum layer, the packaging material can be made more cost-efficient and more environmentally friendly.

The anvil may further comprise a recess arranged in the middle section and extending along the second axis, A2, of the anvil. During a transversal sealing state (i.e. during operation of the anvil) the recess may leave a mark in the transversal sealing along the longitudinal direction of the package. This mark may facilitate quality control of the transversal sealing in that it may indicate any misalignment of the tube in relation to the anvil during the forming of the transversal sealing.

The anvil may further comprise a further recess, extending along the first axis, A1, for receiving a knife used for cutting off the tube.

A width of the first transition section, a width of the second transition section and a width of the middle section may be set based on a width of the longitudinal sealing section of the tube. In other words, the above referenced widths may be selected based on the type (e.g. size or shape of package, or thickness of packaging material) of food package that is to be produced. The widths of the first and second transition section and the middle section may be set such that a sufficient amount of energy is provided to the first and second transversal edge sections and the longitudinal sealing section.

According to a second aspect, there is provided an ultrasonic sealing system for sealing a transversal sealing section of a tube of packaging material. The transversal sealing section comprises a first transversal edge section, a longitudinal sealing, LS, section and a second transversal edge section. The ultrasonic sealing system comprises an ultrasonic generating device arranged to transmit ultrasonic vibrations into a transversal sealing section of the tube. The ultrasonic generating device comprises a sonotrode and a clamping unit. The ultrasonic sealing system further comprises an anvil arranged to face the ultrasonic generating device. The anvil comprises a ridge extending along a first axis, A1, of the anvil, a release surface extending along the first axis of the anvil, and a support surface extending along the first axis of the anvil, and arranged between the ridge and the release surface. The anvil comprises a first and a second side section, a middle section, a first transition section arranged between the first side section and the middle section, and a second transition section arranged between the middle section and the second side section. In the first and second side section, the ridge, the release surface and the support surface follows a first profile. In the middle section, the ridge, the release surface and the support surface follows a second profile. A height of the ridge and the support surface in the first profile is greater than a respective height in the second profile, and a height of the release surface in the first profile is the same as in the second profile.

The sonotrode may also herein be referred to as an active part of the ultrasonic generating device. The clamping unis may also be referred to as an static part of the ultrasonic generating device. In the 3-layer region, the pressure need to be high enough to limit the heating to the relevant region, while being low enough to not give rise to any high stress gradients causing damage to the packaging material. Separating the ultrasonic generating device into an active and static part provides a way of managing this conflict. The active part can provide the ultrasonic heating in the 3-layer region, while the static part can apply a static pressure to the tube outside of the transversal sealing section to reduce a heating effect in these parts. The static part may engage the support surface to have the further effect of preventing any melted plastic in the transversal sealing section to be spread into the non-sealed part of the package.

It should be appreciated that the anvil in the second aspect may be the anvil of the first aspect.

In an alternative formulation of the second aspect, there is provided an ultrasonic sealing system for transversally sealing a tube of packaging material. The ultrasonic sealing system comprises an ultrasonic generating device arranged to transmit ultrasonic vibrations. The ultrasonic generating device comprises a sonotrode and a clamping unit. The ultrasonic sealing system further comprises an anvil arranged to face the ultrasonic generating device. The anvil comprises a ridge extending along a first axis, A1, of the anvil, a release surface extending along the first axis of the anvil, and a support surface extending along the first axis of the anvil, and arranged between the ridge and the release surface. The anvil comprises a first and a second side section, a middle section, a first transition section arranged between the first side section and the middle section, and a second transition section arranged between the middle section and the second side section. In the first and second side section, the ridge, the release surface and the support surface follows a first profile. In the middle section, the ridge, the release surface and the support surface follows a second profile. A height of the ridge and the support surface in the first profile is greater than a respective height in the second profile, and a height of the release surface in the first profile is the same as in the second profile.

In the first transition section, the ridge and the support surface may transition from a respective first and second height, H1, H2, of the first side section to a respective third and fourth height, H3, H4, of the middle section over a first width, W1, of the first transition section. In the second transition section, the ridge and the support surface may transition from the respective third and fourth height, H3, H4, of the middle section to a respective fifth and sixth height, H5, H6, of the second side section over a second width, W2, of the second transition section. The first width, W1, of the first transition section may be smaller than the second width, W2, of the second transition section.

The ridge may be arranged to face the sonotrode of the ultrasonic generating device. The support surface and the release surface may be arranged to face the clamping unit of the ultrasonic generating device. By having the support surface engage the clamping unit during operation, the heating effect of the sonotrode can be reduced in areas of the tube that is not to be sealed, and any melted plastic may be prevented from spreading into the package.

A surface of the sonotrode and a surface of the clamping unit arranged towards the anvil may have a same plane. Put differently, the active part and the static part may be in the same plane. This may simplify manufacturing of the ultrasonic generating device. It further allows the same ultrasonic generating device to be used for different applications, e.g. for different packaging materials, while the adaptation to the different applications may be made by changing only the anvil.

The clamping unit may be spring loaded. An effect of which may be that a more independent force between the active and static part can be provided.

The support surface and/or release surface and/or a surface of the clamping unit may be provided with an elastic material. The elastic material may for instance be polyurethane rubber or any other suitable elastic material. An effect of having the clamping unit and/or the surfaces of the anvil engaging the clamping unit provided with an elastic material is that the distribution of the pressure applied by the clamping unit may be more evenly distributed.

The above-mentioned features of the first aspect, when applicable, apply to this second aspect as well. In order to avoid undue repetition, reference is made to the above.

According to a third aspect, there is provided a packaging machine comprising a transversal sealing, TS, station for transversally seal and cut a tube of packaging material into packages. The TS station comprises an ultrasonic sealing system according to the second aspect.

The above-mentioned features of the first and second aspects, when applicable, apply to this third aspect as well. In order to avoid undue repetition, reference is made to the above.

According to a fourth aspect, there is provided a method for transversally sealing a tube of packaging material using an ultrasonic sealing system according to the second aspect. The packaging material comprises a paperboard layer and a plastic foil attached to the paperboard layer. The method comprises providing a transversal sealing section of the tube of packaging material between the ultrasonic generating device and the anvil of the ultrasonic sealing system. The method further comprises generating ultrasonic vibrations by using the sonotrode of the ultrasonic generating device, such that the plastic foil of the packaging material in the transversal sealing section at least partly melts. The method further comprises pressing together the tube in the transversal sealing section between the ultrasonic generating device and the anvil, such that a pressure is formed over the transversal sealing section causing the plastic foil to bond, thereby forming a transversal sealing.

The above-mentioned features of the first, second and third aspects, when applicable, apply to this fourth aspect as well. In order to avoid undue repetition, reference is made to the above.

A further scope of applicability of the present disclosure will become apparent from the detailed description given below. However, it should be understood that the detailed description and specific examples, while indicating some variants of the present inventive concept, are given by way of illustration only, since various changes and modifications within the scope of the inventive concept will become apparent to those skilled in the art from this detailed description.

Hence, it is to be understood that this inventive concept is not limited to the particular steps of the methods described or component parts of the systems described as such method and system may vary. It is also to be understood that the terminology used herein is for purpose of describing particular embodiments only and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a device" or "the device" may include several devices, and the like. Furthermore, the words "comprising", "including", "containing" and similar wordings do not exclude other elements or steps.

### Brief description of the drawings

The above and other aspects of the present inventive concept will now be described in more detail, with reference to appended drawings showing variants of the present inventive concept. The figures should not be considered limiting the invention to the specific variant; instead, they are used for explaining and understanding the inventive concept.

As illustrated in the figures, the sizes of layers and regions are exaggerated for illustrative purposes and, thus, are provided to illustrate the general structures of variants of the present inventive concept. Like reference numerals refer to like elements throughout.
Figure 1 is a general illustration of a packaging machine.
Figure 2 is a cross-sectional view of a ultrasonic sealing system.
Figure 3A illustrates a tube of packaging material from a side view.
Figure 3B illustrates, in cross-section, the tube of packaging material in a top view.
Figure 4A illustrates, by way of example, a ultrasonic sealing system.
Figure 4B illustrates, by way of example, a portion of an anvil in cross-sectional view.
Figure 5A illustrates, by way of example, a first profile of an anvil.
Figure 5B illustrates, by way of example, a second profile of an anvil.
Figure 5C illustrates, by way of example, a sweep profile of an anvil.
Figure 5D illustrates, by way of a further example, a sweep profile of the anvil.
Fig. 6A to 6C illustrates different positions of a longitudinal sealing section in relation to a portion of an anvil.
Figure 7 illustrates, by way of example, an anvil in a perspective view.
Figure 8 is a flow chart illustrating the steps of a method for transversally sealing a tube of packaging material.

### Detailed description

The present inventive concept will now be described more fully hereinafter with reference to the accompanying drawings, in which some variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" or each as an alternative.

It will also be understood that, although the term first, second, etc. may be used herein to describe various elements or features, these elements should not be limited by these terms. These terms are only used to distinguish one element from another. For example, a first side section could be termed a second side section, and, similarly, a second side section could be termed a first side section, without departing from the scope of the embodiments. The first side section and the second side section are both side section, but they are not the same side section.

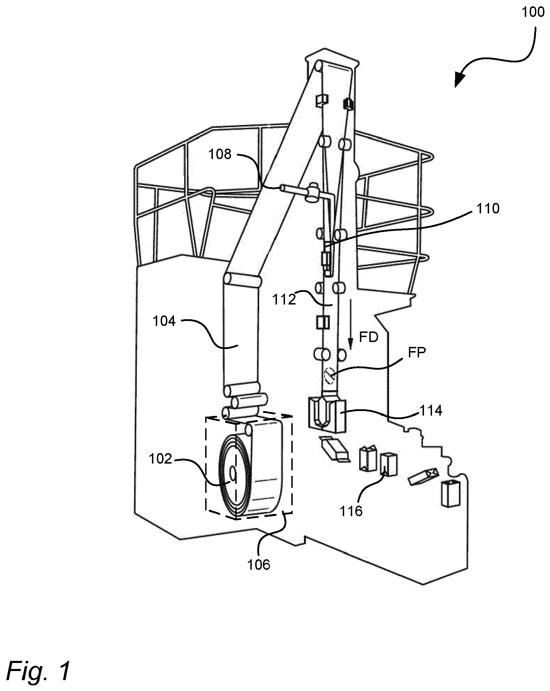

An anvil for an ultrasonic sealing system, a ultrasonic sealing system comprising the anvil, a packaging machine comprising the ultrasonic sealing system and a method for transversally sealing a tube of packaging material using the ultrasonic sealing system will now be described with reference to Fig. 1 to 8.

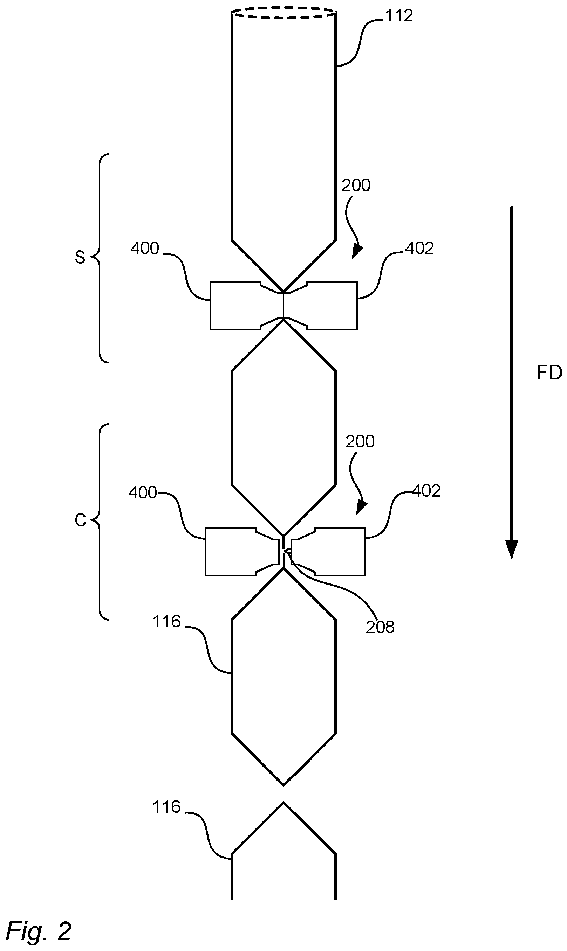

Figure 1 is a general illustration of a packaging machine 100. In the broadest form, the packaging machine 100 comprises a transversal sealing station 114 for transversally seal and cut a tube of packaging material 112 into packages 116. The packaging material may comprise a paperboard layer and a plastic foil. The plastic foil may be attached to the paperboard layer. The transversal sealing station comprises an ultrasonic sealing system 200 as will be further described below in connection with Fig. 2 and Fig. 4A to 7. The packaging machine 100 may be a stand-alone packaging machine, or part of a larger food packaging or processing pipeline.

In the example illustrated in Fig. 1, the packaging machine 100 is a roll-fed packaging machine, the general principles of which will be described in the following. In such a machine, the packaging material is provided on a roll (or reel) 102 of packaging material, loaded into a reel receiver 106 of the packaging machine 100. From the roll 102 of packaging material, a web 104 of packaging material is formed. Although not illustrated, the web 104 of packaging material may pass through a sterilization station for removing or reducing a number of unwanted microorganisms from the web 104. The sterilization may e.g. comprise a hydrogen peroxide bath, a Low Voltage Electron Beam (LVEB) device or any other suitable apparatus capable of meeting food safety regulations.

After sterilization, the web 104 can be formed into a tube 112, e.g. by a longitudinal sealing station 110. The tube 112 is formed by joining the two edges of the web 104 by a longitudinal sealing. The wording "longitudinal" herein relates to the longitudinal direction of the web 104 or tube 112 of packaging material. Thus, the longitudinal direction coincides with a feeding direction, FD, in the packaging machine 100. When having formed the tube 112, a food product, FP, can be fed into the tube 112 via a product filling pipe 108, arranged at least partly inside the tube 112.

The filled tube 112 then reaches the transversal sealing station 114 comprising the ultrasonic sealing system 200. The wording "transversal" herein relates to a direction across the tube (i.e. a transversal direction, TD) once flattened in the transversal sealing station 114. In the transversal sealing station 114, a transversal sealing is made in a lower end of the tube by using the ultrasonic sealing system 200. Generally, the ultrasonic sealing system 200 (which is further described below in connection with Fig. 2) has two main functions; 1) providing the transversal sealing, i.e. welding two opposite sides of the tube 112 together such that the product in a lower part of the tube 112, placed downward the ultrasonic sealing system 200, is separated from the product in the tube 112 placed upward the ultrasonic sealing system 200, and 2) cutting off the lower part of the tube such that a package 116 is formed. Alternatively, instead of providing the transversal sealing and cutting off the lower part in one and the same system 200 as illustrated, the step of cutting off the lower part may be made in a subsequent step by a different piece of equipment, or by the consumer if the packages are intended to be sold in a multi-pack.

After a package 116 has been formed, it may be folded in a folding station (not shown) thereby forming a finished food package 116.

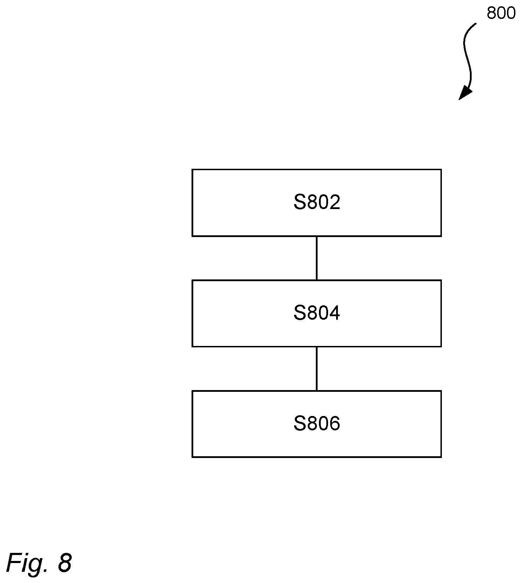

Figure 2 is a cross-sectional view of an ultrasonic sealing system 200. More specifically, Fig. 2 illustrates the general principle of the ultrasonic sealing system 200 and its process in further detail by way of example. The process of operating the ultrasonic sealing system 200 to form a transversal sealing is further described below, in connection with Fig. 8.

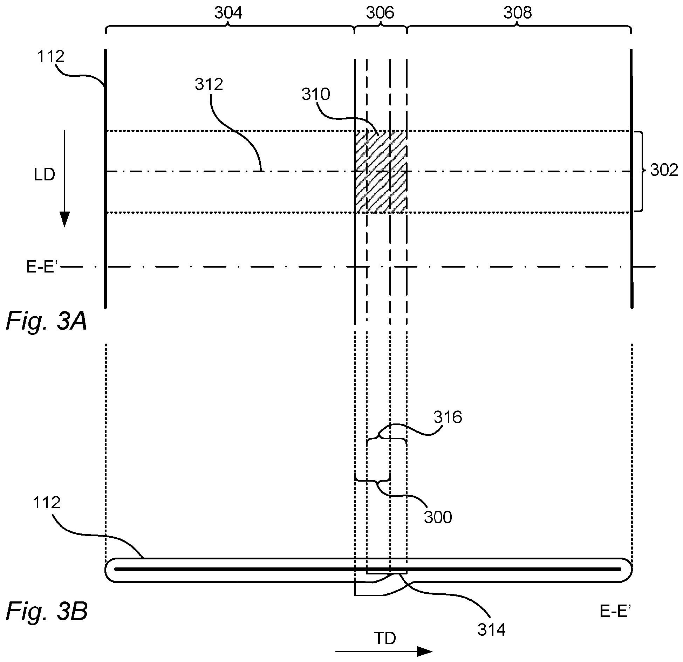

The ultrasonic sealing system 200 is configured for sealing a transversal sealing section 302 of a tube 112 of packaging material. The transversal sealing section 302, which is further illustrated in connection with Fig. 3A and 3B, comprises a first transversal edge section 304, a longitudinal sealing, LS, section 306 and a second transversal edge section 308.

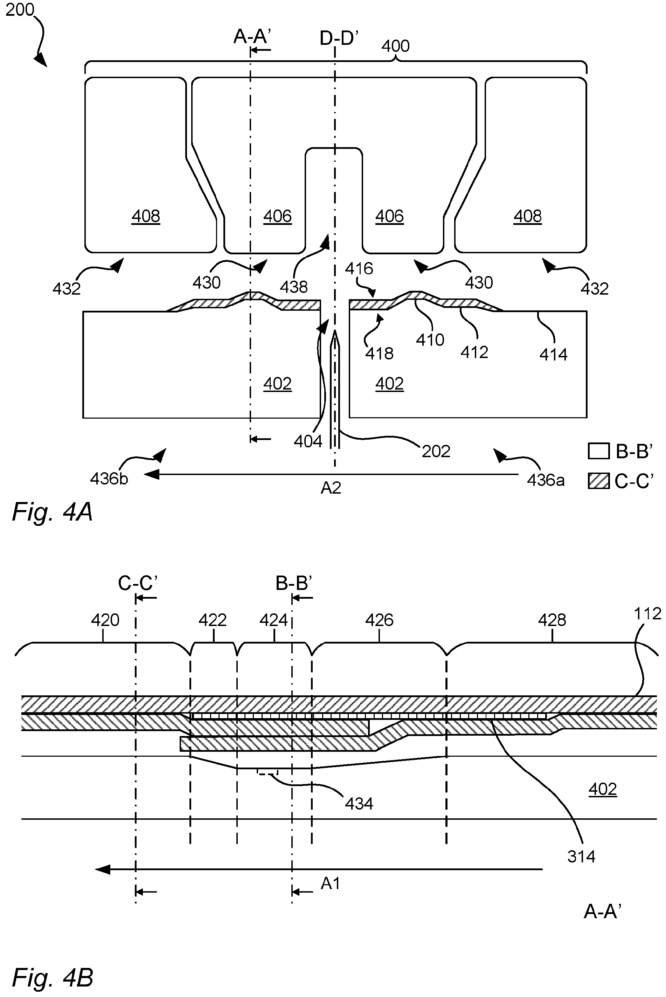

The ultrasonic sealing system 200 comprises an ultrasonic generating device 400 and an anvil 402. These are further described below, e.g. in connection with Fig. 4A and 4B. The ultrasonic sealing system 200 may comprise a plurality of pairs of ultrasonic generating devices 400 and anvils 402 arranged in a jaw system, for being able to form the transversal sealing without interrupting the continuous movement of the tube 112.

The ultrasonic generating device 400 is arranged to transmit ultrasonic vibrations into the transversal sealing section 302 of the tube 112. The anvil 402 is arranged opposite from the ultrasonic generating device 400 to give a counter force to the ultrasonic generating device 400.

In order to provide for a more controlled forming process of the package 116, the ultrasonic sealing system 200 may further comprise so-called volume forming flaps (not shown). More specifically, the volume forming flaps may be used to steer the tube 112 having a circular cross-section into a package having a rectangular cross-section in a controlled manner.

Turning to the process of the ultrasonic sealing system 200, the tube 112 is preferably fed from above, since this provides for that product can be held inside the tube as illustrated in Fig. 1. In a first stage, a sealing stage S, the ultrasonic generating device 400 and anvil 402 are moved towards each other, in a respective direction opposite from each other, such that two opposite sides of the tube 112 are pressed towards one another. It should be appreciated that either one of the ultrasonic generating device and the anvil may be fixed, such that only the other one is moved.

In order to provide for the transversal sealing, heat is provided in the packaging material by generating ultrasonic acoustic vibrations by the ultrasonic generating device 400. The heat provides for that a plastic layer (may also be referred to as a plastic foil, a polymer layer or a thermoplastic polymer layer) of the packaging material is at least partly melted, which in turn provides for the plastic layer can be used for making sure that the two opposite sides of the tube 112 can attach to each other and stay together after the applied pressure is removed. In a subsequent step, herein referred to as a cutting stage C, the lower part of the tube 104 can be cut off (e.g. by a knife 208) such that the package 116 is formed. In this example, the knife 208 is provided in the anvil 402. However, the knife may alternatively be provided on the other side of the tube 112, in the ultrasonic generating device 400, or the cutting step may be performed by a separate device downstream the transversal sealing device 200.

In order to increase a speed in which packages are formed, the parts of the ultrasonic sealing system (e.g. the ultrasonic generating device 400, the anvil 402 and any other optional parts) can be moved together with the tube 112 in a feeding direction FD during the sealing stage S and the cutting stage C. Thus, the ultrasonic generating device 400 and the anvil 402 illustrated in the sealing state S may be the same as the ultrasonic generating device 400 and the anvil 402 in the cutting state C.

Figure 3A illustrates a tube 112 of packaging material from a side view, in a stage where it is pressed together to form the transversal sealing, TS. The wording "side view" herein refers to the case when the tube 112 is arranged in a vertical direction as seen in Fig. 2. Thus, it illustrates an outer surface of the tube 112. Figure 3B also illustrates the tube, but in cross-sectional view from the top, e.g. along the line E-E'. It should be noted that the sizes and proportions of the different sections and areas illustrated herein should mainly be seen as examples for illustrating what is meant by the different sections and areas of the tube 112, and may not be representative of an actual tube 112 of packaging material.

As illustrated herein, the tube 112, when flattened, can be divided (in the transversal direction, TD, of the tube) into a first transversal edge section 304 and a second transversal edge section 308. Between the first and second transversal edge section 304, 308, there is a longitudinal sealing, LS, section 306. These sections may extend along the tube 112 in the longitudinal direction. The first and second transversal edge sections 304, 308 may be seen are regions of the tube 112 being two layer thick, i.e. a 2-layer region of the tube 112.

The LS section 306 may be defined as the section where the thickness of the tube 112 is affected by the LS. The LS section 306 may in other words be seen as a 3-layer region of the tube 112. In a subsection of the LS section 306, herein referred to as the LS area 300, the tube 112 of packaging material when pressed together is three layers thick, due to how the packaging material is folded to form the LS. The LS section 306 further extends over a LS strip 314, which can be defined by an LS strip area 316. The LS strip is applied during the forming of the LS in order to provide a seal on the inside of the tube 112. The presence of the LS strip and the folding of the packaging material also affects the thickness of the tube in the LS strip area 316, which also has to be considered when forming the TS.

In the longitudinal direction, LD, (perpendicular to the TD) a TS section 302 can be defined as an area where the TS is to be formed. The TS section may, as illustrated herein, define a section on either side of a cutting line 312 at which the tube 112 will be cut to form two separate packages. It should be noted that the TS formed in the TS section 302 need not to cover the entire TS section 302. The TS section 302 should rather be understood as a section which is involved during the forming of the TS, e.g. in the sense that it may come into contact with the ultrasonic generating device 400 and/or the anvil 402 during the process of forming the transversal sealing.

At a cross section between the TS section 302 and the LS section 306, a TS-LS cross 310 (or TS-LS overlap area) is formed, herein illustrated by diagonal lines.

Figure 4A illustrates, by way of example, an ultrasonic sealing system 200 in accordance with the present inventive concept. In particular, Fig. 4A illustrates the ultrasonic sealing system 200 in a first cross section at a line B-B' (see Fig. 4B) at a first position along a first axis (denoted A1) of the anvil 402, and at a second cross section at a line C-C' (see Fig. 4B), indicated by diagonal lines, at a second position along the first axis A1. Figure 4B illustrates a portion of the an anvil 402 of the ultrasonic sealing system 200 in a cross-section at a line A-A' (see Fig. 4A) at a position along a second axis (denoted A2) of the anvil 402. The first axis A1 and the second axis A2 are perpendicular to each other. During operation, the first axis A1 corresponds to the transversal direction of the tube 112, and the second axis A2 corresponds to the longitudinal direction (or feeding direction) of the tube 112.

It should be appreciated that the ultrasonic sealing system 200 illustrated herein is configured to form a transversal sealing on two opposite sides of a cutting line, separating two consecutive packages. The ultrasonic sealing system 200 may thus have a first portion 436a and a second portion 436b. The first and second portion 436a, 436b is then configured to form a transversal sealing in a respective package of two consecutive packages. The first and second portion 436a, 436b may be separated by a central line D-D' as illustrated herein. The central line D-D' may be a symmetry line. In other words, the first and second portion 436a, 436b may be symmetric around the line D-D'. Thus, when stating e.g. that the anvil 402 comprises a ridge 410, it should also be understood that the anvil may comprise a further ridge, on the opposite side of the center line D-D', as is illustrated herein. However, as is readily understood, the ultrasonic sealing system 200 may alternatively be configured to form only one transversal sealing, i.e. the first and second portion 436a, 436b may be separated into two separate elements. Thus, the anvil 402 may comprise only one ridge. In the following, the ultrasonic sealing system 200 will mainly be described with reference to one of the portions (herein the first portion 436a), but the same features and aspects hold also for the second portion 436b.

The ultrasonic generating device 400 is arranged to transmit ultrasonic vibrations into the transversal sealing section of the tube during operation. Thereby, heat generation may be caused in the packaging material, which in turn causes the plastic material in the transversal sealing section to at least partly melt.

The ultrasonic generating device 400 comprises a sonotrode 406 (also known as a horn) and a clamping unit 408. The sonotrode 406 is configured to provide an alternating pressure, thereby generating the ultrasonic vibrations. The clamping unit 408 is configured to apply a static pressure to the tube 112 during the forming of the transversal sealing. The sonotrode 406 and the clamping unit 408 may thus be controlled separately. The clamping unit 408 may be spring loaded, so as to provide a more independent pressure from the sonotrode 406. Alternatively, or in combination, the clamping unit 408, or more specifically a surface 432 of the clamping unit 408 may be provided with an elastic material, which can be different types of elastomers such as polyurethane and silicone. An effect of which may be that a more even static pressure is achieved. As an alternative, the elastic material may be provided on a support surface 412 and or a release surface 414 of an anvil 402 (further explained below). A surface of the 430 of the sonotrode 406 and a surface of the clamping unit 408 (the surfaces being arranged towards the anvil 402) may have a same plane. In other words, the surfaces of the ultrasonic generating device 400 arranged to engage the packaging material during the sealing process may be arranged in the same plane.

The ultrasonic sealing system 200 further comprises an anvil 402. The anvil 402 is arranged to face the ultrasonic generating device 400. The anvil 402 comprises a ridge 410. The ridge 410 extends along the first direction A1 of the anvil 402. In other words, the ridge 410 may span over the entire length of the anvil 402 along the first axis. A purpose of the ridge 410 is to concentrate the pressure and the ultrasonic heat generation at a region around the ridge 410. This is due to the ridge 410 being a raised portion of the anvil 402 wh first engages the ultrasonic generating device 400. In particular, the ridge 410 is arranged to face or engage the sonotrode 406 of the ultrasonic generating device 400. In other words, the ridge 410 is located where the active part of the ultrasonic generating device 400 operates during a sealing process. The anvil 402 further comprises a release surface 414 extending along the first axis A1 of the anvil 402. The anvil 402 further comprises a support surface 412. The support surface 412 extends along the first axis A1 of the anvil 402 and is arranged between the ridge 410 and the release surface 414. Preferably, the support surface 412 has a lower height than the ridge 410. The release surface 414 in turn has a lower height than the support surface 412. The support surface 412 and the release surface 414 are preferably arranged to face the clamping unit 408 of the ultrasonic generating device 400.

The support surface 410 (together with the clamping unit 508) provides a certain static pressure that can block any ultrasonic movement or ultrasonic heating that is generated between the sonotrode 406 and the ridge 410. The support surface thus function as an enclosure of the sealing process to a well-defined area around the ridge 410, and may prevent the ultrasonic vibrations from damaging the packaging material outside of an active transversal sealing area. Another advantage may be that the support surface (together with the clamping unit 408 stops any melted plastic to flow out from the seal, and into the package.

The release surface 414, provided outside of the support surface (as seen from the center line D-D') serves as a region where little to no pressure or contact is made with the packaging material. No sealing may therefore be formed in a part of the tube 112 that is present between the clamping unit 408 and release surface 414 during the sealing process. Looking at the cross section A-A' of Fig. 4B (i.e. the cross section along the first axis A1 of the anvil at the line A-A'), the anvil 402 can be divided into a number of different sections. The anvil 402 comprises a first side section 420 and a second side section 428. The first and second side section 420, 428 are to be seen as a respective outermost section of the anvil 402 along the first direction A1. The first and second side section 420, 428 are arranged to interact with at least the first and second transversal edge section 304, 308 of the tube 112 respectively. In other words, the first and second side section 420, 428 may be seen as a first and second 2-layer region of the anvil 402.

The anvil 402 further comprises a middle section 424 arranged between the first and second side section 420, 428. The middle section is arranged to interact with at least part of the LS section 306 of the tube 112. In other words, the middle section 424 may be seen as a 3-layer region of the anvil 402.

The anvil 402 further comprises a first and second transition section 422, 426. The first transition section 422 is arranged between the first side section 420 and the middle section 424. The first transition section 422 is in other words a section in which the anvil 402 transitions from the first side section 402 to the middle section 424 (and vice versa). Similarly, the second transition section 426 is arranged between the middle section 424 and the second side section 428. In the second transition section 426, the anvil 402 transitions from the middle section 424 to the second side section 428.

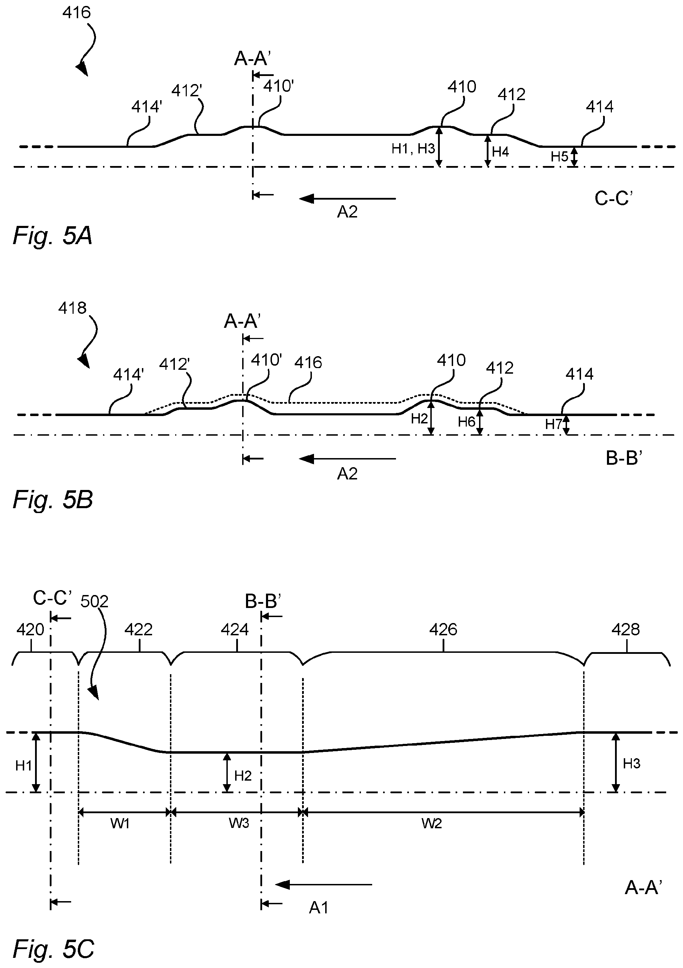

The first and second side section 420, 428 may correspond to a 2-layer region of the tube 112, and the middle section 424 may correspond to a 3-layer region of the tube 112. In the first and second side section 420, 428, the anvil 402 has a first profile 416 when seen in a direction parallel to the first axis A1. Put differently, the ridge 410, the support surface 412 and the release surface 414 follows the first profile 416 in the first and second side sections 420, 428. In the middle section 424, the anvil 402 has a second profile 418. Put differently, the ridge 410, the support surface 412 and the release surface 414 follows the second profile 416 in the middle section 424. A height of the ridge 410 in the first profile 416 is greater than a height of the ridge 410 in the second profile 418. Similarly, a height of the support surface 412 in the first profile 416 is greater than a height of the support surface 412 in the second profile 418. A height of the release surface 414 in the first profile 416 is in the illustrated example the same as a height of the release surface 414 in the second profile 418. Alternatively, the release surface 414 may have a greater height in the first profile 416 than in the second profile 418. The first and second profile 416, 418 of the anvil 402 are further described in connection with Fig. 5A to 5C.

Looking at the example of Fig. 4B, the transition from the first side section 420, through the middle section, to the second side section 428 is asymmetric. In the present example, this is achieved by having different widths of the first and second transition section 422, 426, as will be further illustrated in connection with Fig. 5C. In the illustrated example of Fig. 4B, the first transition section 422 has a smaller width that the second transition section 426. Thus, a steeper transition is obtained for the first transition section 422 than for the second transition section 426. Alternatively, the transition may be symmetric.

Fig. 4B further illustrates a section of the tube 112 of packaging material comprising the longitudinal sealing section, for illustrating how the anvil 402 is configured to interact with the tube 112. As has been explained in the foregoing, the longitudinal sealing is asymmetric, due to how the packaging material overlaps, and the presence of the LS strip 314. In particular, the longitudinal sealing has a non-covered edge (i.e. where the edge of the packaging material is exposed) and one covered edge (i.e. where the other edge of the packaging material is protected by other parts of the packaging material. The steeper transition section in the current example (herein the first transition section 422) helps to achieve an improved sealing of the non-covered edge of the longitudinal sealing, e.g. by providing a higher pressure at the corresponding region of the packaging material, which also improves handling of any melted plastic in the non-covered edge. For the covered edge of the longitudinal sealing, the less steep transition (i.e. the second transition section 426) provides an improved pressure distribution over the less sharp (compared to the non-covered edge) transition from tree layers to two layers of packaging material. However, an asymmetric transition adapted for the longitudinal sealing may also be achieved having the first transition section 422 being wider than the second transition section 426.

In the illustrated example of Fig. 4B, the side of the tube 112 having overlapping packaging material, i.e. at the non-covered edge, is arranged towards the anvil. However, the overlap can also be arranged towards the ultrasonic generating device. The same general principle is applicable in this alternative case as in the presently illustrated case, even though minor adjustments may have to be made.

It should be noted that the present example should be seen as a non-limiting example of the presently disclosed subject matter. The anvil 402 may for instance have more or less asymmetry in the transition between the first and second side section 420, 428 and the middle section 424. By asymmetric, it is herein meant any difference in shape from a center line of the middle section 424 or from a center line of the anvil 402. The asymmetry may e.g. be achieved by having different width of the first and second transition section. Alternatively, or in combination, the first and second transition section may have different transitions. The transitions may differ in their inclinations. The transition may have a constant inclination as illustrated herein. Thus, the transition of the first and second transition sections may differ in an amount of inclination. Alternatively, the transition may be step-wise. The transition may for example comprise two or more different inclinations. Alternatively, the transition may have a gradually increasing/decreasing inclination. Thus, in the broadest example of an asymmetric anvil 402, the anvil may be asymmetrical in that the transitions in the first and second transition section are different from each other. The first and second transition section 422, 426 may be different from each other e.g. in the width of the respective section, a shape of the transition and/or an inclination of the transition. The asymmetry may e.g. be seen from a central line of the middle section 424 as reference.

The anvil 402 may further comprise a recess 434 arranged in the middle section 424 and extending along the second axis A2 of the anvil. The recess provides an imprint in the transversal sealing which can be used in quality assessment of the transversal sealing process, by indicating whether the packaging material was misaligned within the ultrasonic sealing system 200. As an alternative to the recess 434, a protrusion extending along the second axis A2 may be provided.

The anvil 402 may further comprise a further recess 404, extending along the first axis, A1, for receiving a knife 202 used for cutting off the tube 112. The sonotrode 406 may comprise a corresponding further recess 438 arranged in line with the further recess 404 of the anvil 402 for allowing the knife 202, during a cutting state, to at least partly enter the sonotrode 406.

Figure 5A to 5D illustrates three different profiles of the anvil 402. More specifically, Fig. 5A illustrates, by way of example, a first profile 416 of the anvil 402, e.g. the first profile 416 as described in the foregoing in connection with Fig. 4A and 4B. Fig. 5B illustrates, by way of example, a second profile 418 of the anvil 402, e.g. the second profile 418 as described in the foregoing in connection with Fig 4A and 4B. The first and second profile 416, 418 as illustrated herein, shows the profile of an active surface of the anvil 402 (i.e. the surface arranged towards the packaging material during the sealing process) as seen along a direction parallel to the first axis of the anvil 402 (i.e. as a cross section along the second axis A2 of the anvil 402). In particular, the first profile 416 as illustrated in Fig. 5A shows a cross-section along a line C-C' in the first side section 420 of the anvil 402, and the second profile 418 as illustrated in Fig. 5B shows a cross-section along a line B-B' in the middle section 424 of the anvil 402 (see Fig. 5C for reference).

Fig. 5C on the other hand illustrates, by way of example, a sweep profile 502 (or transition profile 502) of the anvil 402. It shows in particular a part of the sweep profile 502 around the middle section 424 of the anvil. The sweep profile 502 shows the profile of the active surface of the anvil 402 as seen in a direction parallel to the second axis A2 of the anvil 402 (i.e. as a cross-section along the first axis A1). In particular, the sweep profile shows a cross section along a line A-A', at a ridge 410 of the anvil 402 (see Fig. 5A and 5B as reference). The same, or similar sweep profile may be provided also for the support surface 412 if present.

Turning first to Fig. 5A and 5B, and the first and second profile 416, 418 of the anvil. The first and second profile 416, 418 illustrates the case where the anvil 416 is configured to seal two consecutive packages, as also illustrated in Fig. 4A. Thus, the anvil comprises a ridge 410, a support surface 412, and a release surface 414, as well as a further ridge 410', a further support surface 412', and a further release surface 414'. The first and second profile 416, 418 are each symmetrical around its central axis, in the middle of the ridge 410 and the further ridge 410'. Thus, what is said about the ridge 410, the support surface 412, and the release surface 414, holds also for the further ridge 410', the further support surface 412', and the further release surface 414'. To avoid undue repetition, reference will in the following only be made to the ridge 410, the support surface 412, and the release surface 414. The further recess for receiving a knife is herein left out for illustrative purposes, but may be provided in the middle of the illustrated profiles.

The ridge 410 has in the first profile 416, corresponding to the first and second side section 420, 428 of the anvil, a first respectively a third height, denoted by H1, H3. Preferably, the first height H1 and the third height H3 is the same. However, in some embodiments, the first height H1 and the second height H3 may be different from each other. In the second profile 418, corresponding to the middle section 424 of the anvil, the ridge 410 has a second height, denoted H2. The second height H2 is smaller than the first and third height H1, H3, as can be seen in Fig. 5B by comparing the second profile 418 with the first profile 416 which is illustrated in broken lines for illustrative purposes. Having the ridge 410 at the lower second height in the middle section 424 is advantageous in that it may compensate for the extra thickness of the tube (due to the longitudinal sealing) present at the middle section 424 of the anvil during the sealing process. For the same reason, the support surface 412 has a fourth height denoted H4 in the first profile 416, and a lower sixth height denoted H6 in the second profile 418. Further, the height of the support surface 412 is preferably lower that the height of the ridge 410, in order to not cause as high pressure in the packaging material. Thus, the fourth height H4 is lower than the first and third height H1, H3, and the sixth height H6 is lower than the second height H2. Similarly, the release surface 414 should have a lower height than the support surface 412, to provide little to no pressure in the packaging material present at the release surface 414. Thus, a fifth height denoted H5 of the release surface 414 in the first profile 416 is lower than the fourth height H4. Further, a seventh height denoted H7 of the release surface 414 in the second profile 418 is lower than the sixth height H6. Preferably, the release surface 414 has the same height in the first profile 416 as in the second profile 418. This may be advantageous in that it simplifies manufacturing of the anvil. Above, only the different heights relative to each other have been discussed, as the general concept is the most important aspect of the present inventive concept. The exact measurements of the anvil will be dependent on what packaging material is used, and what size and shape the packages produced have. Further, is should be appreciated that also other parameters of the anvil may be changed between the first and second profile 416, 418, such as a width and position of the support surface 412 and ridge 410 along the second direction A2 of the anvil, as well as the shape and inclination in the transition between the different parts.

Turning now to Fig. 5C and the sweep profile 502. As explained in the foregoing, the anvil comprises a first and second side section 420, 428, a middle section 424 and a first and second transition section 422, 426. The sweep profile 502 illustrates the transition of the ridge 410 along the first axis of the anvil (i.e. along a transversal direction of the tube during the sealing process). As illustrated in Fig. 5A and 5C, the ridge has a first height H1 in the first side section 420, a second height H2 in the middle section 424 and a third height H3 in the second side section 428. In the present example, the first height H1 and the third height H3 are the same. Thus, in the first transition section 422, the ridge transition from the first height H1 to the second height H2 over a first width, denoted W1, of the first transition section 422. Put differently, the ridge transitions between the first height H1 and the second height H2 in the first transition section. The first transition section 422 having the first width W1. Correspondingly, in the second transition section 426, the ridge transition from the second height H2 to the third height H3 over a second width, denoted W3, of the second transition section 426. Put differently, the ridge transitions between the second height H2 and the third height H3 in the second transition section 426. The second transition section 426 having the second width W2. Further, the middle section 424 has a third width denoted W3. The third width W3 of the middle section 424 may also be adapted based on the package being produced. It may for instance be made wider than depicted herein, or more narrow. The middle section 424 may for instance be a center point (along the first axis A1) of the anvil 402.

The first width W1 of the first transition section 422 is herein smaller than the second width W2 of the second transition section 426, in order to provide for an asymmetric transition profile 502. However, it should be appreciated that the opposite may also be possible, i.e. that the first width W1 is larger than the second width W2.

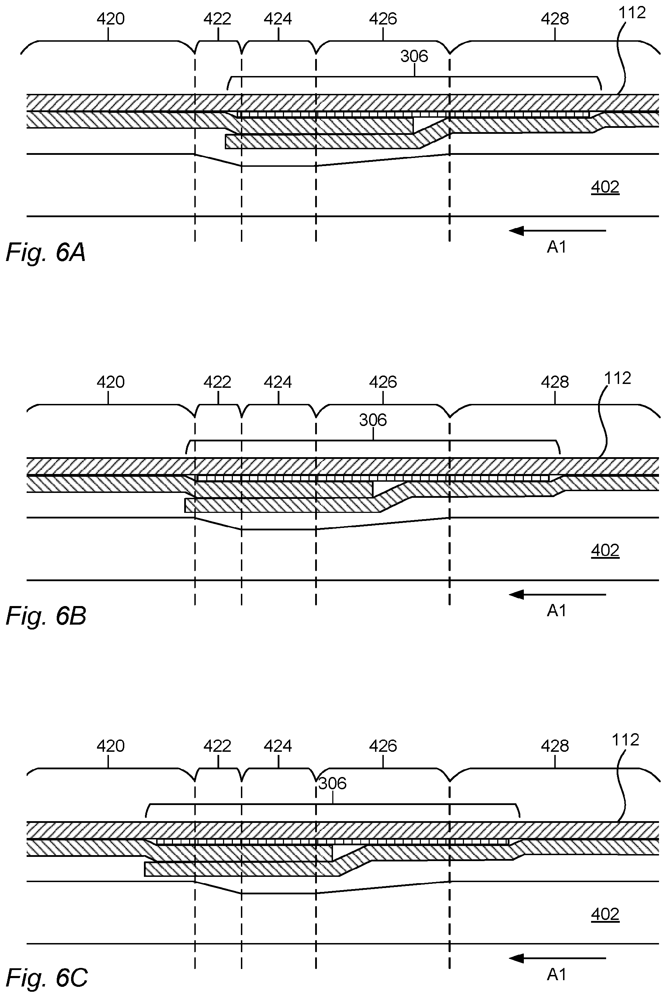

As explained above, the non-symmetric profile allows for an even more improved pressure distribution over the transversal sealing section, an in particular a better seal over the TS-LS cross. Further, the smooth transition between the first and second profile 416, 418 provides for an anvil which is less sensitive to deviations in the position of the longitudinal sealing as will be further illustrated in Fig. 6A to 6C below.

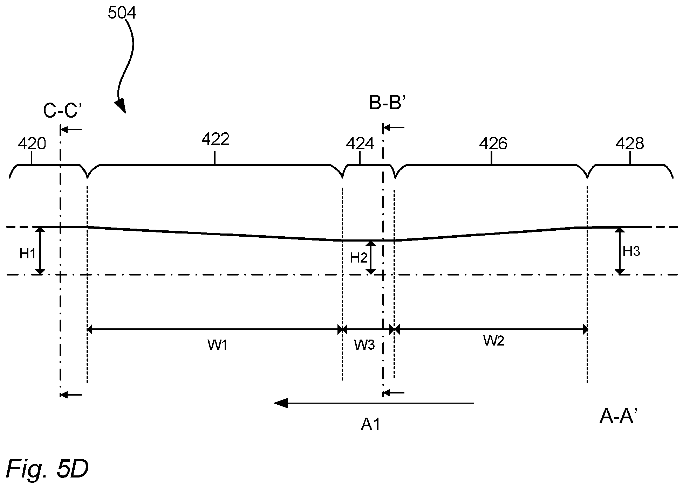

It should be appreciated that different degrees of asymmetry may be implemented within the present inventive concept. As an example, Fig. 5D illustrates an alternative sweep profile 504 having a less noticeable asymmetry. Further, in the example of Fig. 5D, the second width W2 of the second transition section 426 is smaller than the first width W1 of the first transition section 422.

The sweep profile of the anvil may instance be adapted by varying the first height H1, the second height H2 and the third height H3, as well as the first width W1, the second width W2 and the third width W3. Advantageously, the first, second and third width W1, W2, W3 may be set based on a width of the longitudinal sealing section of the tube to be sealed. Preferably, they are set such that a required energy distribution over the longitudinal sealing section is achieved. The first, second and third height H1, H2, H3 may be set based on a thickness of the packaging material.

The different heights are herein provided with reference to a common reference line, indicated by a dash-dot pattern, to illustrate how they relate to each other. It should however be appreciated that the height may be defined from any suitable location, line or plane of the anvil.

Fig. 6A to 6C illustrates different positions of a longitudinal sealing section in relation to a portion of the anvil. In particular, Fig. 6B illustrates a nominal case, in which the longitudinal sealing section 306 of the tube 112 lines up with the middle section 424 and first and second transition section 422, 426 in a preferred way. In turn, Fig. 6A illustrates a case where the tube 112 is shifted by a first distance to the right in the figure (i.e. in a direction opposite from the indicated first axis A1), such that the longitudinal sealing section 306 is shifted towards the second side section 428 of the anvil 402. Finally, Fig. 6C illustrates a case where the tube 112 is shifted by a second distance to the left in the figure (i.e. in the direction of the indicated first axis A1), such that the longitudinal sealing section 306 is shifted towards the first side section 420 of the anvil 402.

Deviations of the longitudinal sealing section 306 in relation to the anvil 402 as illustrated by Fig. 6A to 6C can be expected in a packaging machine due to fluctuations of the web and other inaccuracies. Due to the asymmetric transition profile as proposed herein, there can be achieved an anvil 402 that is more robust, in the sense that a sufficient transversal sealing can be formed despite an occurrence of these types of displacements. This may be further due to having smooth transitions (i.e. the spread out first and second transition sections 422, 426) between the first and second profiles, as opposed to having sharp transitions.

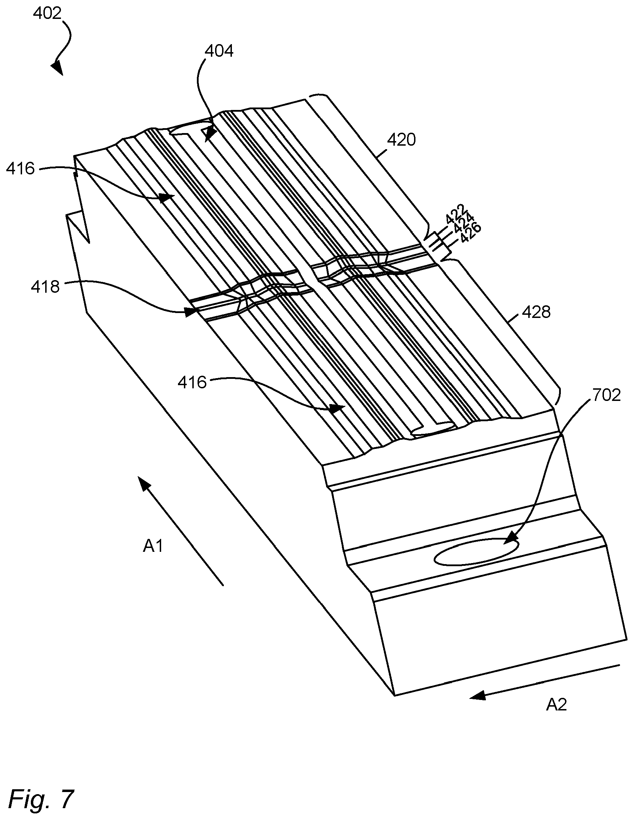

Figure 7 illustrates, by way of example, the anvil 402 in a perspective view. Fig. 7 further illustrates directions of the first axis A1 and the second axis A2 of the anvil 402, which are perpendicular to each other. During operation, the first axis A1 coincides with a transversal direction of the tube, and the second axis A2 coincides with a longitudinal direction (or feeding direction) of the tube. Fig. 7 further illustrates the sections where the anvil has the first and second profile 416, 418 respectively. As explained in the foregoing, the first profile 416 is provided in the first and section side sections of the anvil, which corresponds to a respective outer part of the anvil 402 (with reference to the first axis A1). The second profile 418 is in turn provided in the middle section of the anvil 402, corresponding to a region where the longitudinal sealing section of the tube is to be received (herein at a center of the anvil 402).

The anvil 402 further comprises the further recess 404 for receiving a knife, as explained above. The anvil 402 further comprises mounting means 702 for mounting the anvil 402 in a packaging machine.

Figure 8 is a flow chart illustrating the steps of a method 800 for transversally sealing a tube 112 of packaging material using the ultrasonic sealing system 200 as described above. The method 800 may be seen as a method for operating the ultrasonic sealing system 200. The packaging material comprises a paperboard layer and a plastic foil attached to the paperboard layer. In the following, the different steps are described in more detail with reference to Fig. 8. Even though illustrated in a specific order, the steps of the method 800 may be performed in any suitable order, in parallel, as well as multiple times. For example, steps S804 and S806, as will be further discussed below, can be performed, at least partly, simultaneously.

The method 800 comprises providing S802 a transversal sealing section 302 of the tube 112 of packaging material between the ultrasonic generating device 400 and the anvil 402 of the ultrasonic sealing system 200.

The method further comprises generating S804 ultrasonic vibrations by using the sonotrode 406 of the ultrasonic generating device 400, such that the plastic foil of the packaging material in the transversal sealing section 302 at least partly melts.

The method further comprises pressing S806 together the tube 112 in the transversal sealing section 302 between the ultrasonic generating device 400 and the anvil 402, such that a pressure is formed over the transversal sealing section 302 causing the plastic foil to bond, thereby forming a transversal sealing. Pressing S806 together the tube may comprise, engaging, by the clamping unit 408, a support surface and/or a release surface of the anvil.

It should be noted that the steps of generating S804 the ultrasonic vibrations and pressing S806 together the tube in the transversal sealing section may be performed simultaneously.

It will also be appreciated that when the present disclosure is described in terms of a method, it may also be embodied in apparatus or device comprising one or more processors, one or more memories coupled to the one or more processors, where computer code is loaded to implement the method. For example, the one or more memories may store one or more computer programs that perform the steps, services and functions of the method disclosed herein when executed by the one or more processors in some embodiments.

Additionally, variations to the disclosed variants can be understood and effected by the skilled person in practicing the claimed invention, from a study of the drawings, the disclosure, and the appended claims.

## Claims

1. An anvil (402) of a ultrasonic sealing system (200) for transversally sealing a transversal sealing section (302) of a tube (112) of packaging material, wherein the transversal sealing section (302) comprises a first transversal edge section (304), a longitudinal sealing (LS) section (306) and a second transversal edge section (308), said anvil (402) comprising:
a ridge (410) extending along a first axis (A1) of the anvil (402),
a release surface (414) extending along the first axis of the anvil (402), and
a support surface (412) extending along the first axis of the anvil (402) and arranged between the ridge (410) and the release surface (414),
wherein the anvil (402) comprises a first and a second side section (420, 428), a middle section (424), a first transition section (422) arranged between the first side section (420) and the middle section (424), and a second transition section (426) arranged between the middle section (424) and the second side section (428),
wherein, in the first and second side section (420, 428), the ridge (410), the release surface (414) and the support surface (412) follows a first profile (416),
wherein, in the middle section (424), the ridge (410), the release surface (414) and the support surface (412) follows a second profile (418),
wherein a height of the ridge (410) and the support surface (412) in the first profile (416) is greater than a respective height in the second profile (418), and a height of the release surface (414) in the first profile (416) is the same as in the second profile (418).

2. The anvil (402) according to claim 1, wherein, in the first transition section (422), the ridge (410) and the support surface (412) transitions from a respective first and second height (H1, H2) of the first side section (420) to a respective third and fourth height (H3, H4) of the middle section (424) over a first width (W1) of the first transition section (422),
wherein, in the second transition section (426), the ridge (410) and the support surface (412) transitions from the respective third and fourth height (H3, H4) of the middle section (424) to a respective fifth and sixth height (H5, H6) of the second side section (428) over a second width (W2) of the second transition section (426),
wherein the first width (W1) of the first transition section (422) is smaller than the second width (W2) of the second transition section (426).

3. The anvil (402) according to claim 2, wherein the first height (H1) is the same as the fifth height (H5), and the second height (H2) is the same as the sixth height (H6).

4. The anvil (402) according to any one of the claims 1 to 3, wherein the anvil (402) further comprises a recess (434) arranged in the middle section (424) and extending along a second axis (A2) of the anvil (402).

5. The anvil (402) according to any one of the claims 1 to 4, wherein a width of the first transition section (422), a width of the second transition section (426) and a width of the middle section (424) are set based on a width of the longitudinal sealing section.

6. An ultrasonic sealing system (200) for transversally sealing a transversal sealing section (302) of a tube (112) of packaging material, wherein the transversal sealing section (302) comprises a first transversal edge section (304), a longitudinal sealing (LS) section (306) and a second transversal edge section (308), the ultrasonic sealing system (200) comprising:
an ultrasonic generating device (400) arranged to transmit ultrasonic vibrations into a transversal sealing section of the tube (112), wherein the ultrasonic generating device (400) comprises a sonotrode (406) and a clamping unit (408);
and an anvil (402) according to claim 1 arranged to face the ultrasonic generating device (400).

7. The ultrasonic sealing system (200) according to claim 6, wherein, in the first transition section (422), the ridge (410) and the support surface (412) transitions from a respective first and second height (H1, H2) of the first side section (420) to a respective third and fourth height (H3, H4) of the middle section (424) over a first width (W1) of the first transition section (422),
wherein, in the second transition section (426), the ridge (410) and the support surface (412) transitions from the respective third and fourth height (H3, H4) of the middle section (424) to a respective fifth and sixth height (H5, H6) of the second side section (428) over a second width (W2) of the second transition section (426), and
wherein the first width (W1) of the first transition section (422) is smaller than the second width (W2) of the second transition section (426).

8. The ultrasonic sealing system (200) according to claim 6 or 7, wherein the ridge (410) is arranged to face the sonotrode (406) of the ultrasonic generating device (400), and
wherein the support surface (412) and the release surface (414) are arranged to face the clamping unit (406) of the ultrasonic generating device (400).

9. The ultrasonic sealing system (200) according to any one of the claims 6 to 8, wherein a surface (430) of the sonotrode (406) and a surface (432) of the clamping unit (408) arranged towards the anvil (402) has a same plane.

10. The ultrasonic sealing system (200) according to any one of the claims 6 to 9, wherein the clamping unit (408) is spring loaded.

11. The ultrasonic sealing system (200) according to any one of the claims 6 to 10, wherein the support surface (412) and/or release surface (414) and/or a surface (432) of the clamping unit (408) is provided with an elastic material.

12. A packaging machine (100) comprising a transversal sealing (TS) station (114) for transversally seal and cut a tube of packaging material (112) into packages (116), wherein the TS station (114) comprises a ultrasonic sealing system (200) according to any one of the claims 6 to 11.

13. The packaging machine (100) according to claim 12, wherein the middle section (424) is configured to interact with at least the LS section (418) of the tube during a transversal sealing state, and
wherein the first and second side section (420, 428) are configured to interact with at least the first and the second transversal edge section (304, 308) of the tube (112), respectively, during the transversal sealing state.

14. A method (800) for transversally sealing a tube (112) of packaging material using a ultrasonic sealing system (200) according to any one of the claims 6 to 11, wherein the packaging material comprises a paperboard layer and a plastic foil attached to the paperboard layer, the method (800) comprising:
providing (S802) a transversal sealing section (302) of the tube (112) of packaging material between the ultrasonic generating device (400) and the anvil (402) of the ultrasonic sealing system (302),
generating (S804) ultrasonic vibrations by using the sonotrode (406) of the ultrasonic generating device (400), such that the plastic foil of the packaging material in the transversal sealing section (302) at least partly melts, and
pressing (S806) together the tube (112) in the transversal sealing section (302) between the ultrasonic generating device (400) and the anvil (402), such that a pressure is formed over the transversal sealing section (302) causing the plastic foil to bond, thereby forming a transversal sealing.

## Patentansprüche

1. Ein Amboss (402) eines Ultraschall-Siegelungssystems (200) zum Quersiegeln eines Quersiegelabschnitts (302) eines Schlauchs (112) aus Verpackungsmaterial, wobei der Quersiegelabschnitt (302) einen ersten Querrandabschnitt (304), einen Längsversiegelungsabschnitt (LS) (306) und einen zweiten Querrandabschnitt (308) umfasst, wobei der Amboss (402) umfasst:
einen sich entlang einer ersten Achse (A1) des Ambosses (402) erstreckenden Rippe (410),
eine Ablösefläche (414), die sich entlang der ersten Achse des Ambosses (402) erstreckt, und
eine Auflagefläche (412), die sich entlang der ersten Achse des Ambosses (402) erstreckt und zwischen der Rippe (410) und der Ablösefläche (414) angeordnet ist,
wobei der Amboss (402) einen ersten und einen zweiten Seitenabschnitt (420, 428), einen Mittelabschnitt (424), einen ersten Übergangsabschnitt (422), der zwischen dem ersten Seitenabschnitt (420) und dem Mittelabschnitt (424) angeordnet ist, und einen zweiten Übergangsabschnitt (426), der zwischen dem Mittelabschnitt (424) und dem zweiten Seitenabschnitt (428) angeordnet ist,
wobei im ersten und zweiten Seitenabschnitt (420, 428) die Rippe (410), die Ablösefläche (414) und die Auflagefläche (412) einem ersten Profil (416) folgen,
wobei im Mittelabschnitt (424) die Rippe (410), die Ablösefläche (414) und die Auflagefläche (412) einem zweiten Profil (418) folgen,
wobei eine Höhe der Rippe (410) und der Auflagefläche (412) im ersten Profil (416) größer ist als eine entsprechende Höhe im zweiten Profil (418) und eine Höhe der Ablösefläche (414) im ersten Profil (416) dieselbe ist wie im zweiten Profil (418).

2. Der Amboss (402) nach Anspruch 1, wobei im ersten Übergangsabschnitt (422) die Rippe (410) und die Auflagefläche (412) über eine erste Breite (W1) des ersten Übergangsabschnitts (422) von einer jeweiligen ersten und zweiten Höhe (H1, H2) des ersten Seitenabschnitts (420) zu einer jeweiligen dritten und vierten Höhe (H3, H4) des Mittelabschnitts (424) übergehen,
wobei im zweiten Übergangsabschnitt (426) die Rippe (410) und die Auflagefläche (412) über eine zweite Breite (W2) des zweiten Übergangsabschnitts (426) von der jeweiligen dritten und vierten Höhe (H3, H4) des Mittelabschnitts (424) zu einer jeweiligen fünften und sechsten Höhe (H5, H6) des zweiten Seitenabschnitts (428) übergehen,
wobei die erste Breite (W1) des ersten Übergangsabschnitts (422) kleiner ist als die zweite Breite (W2) des zweiten Übergangsabschnitts (426).

3. Der Amboss (402) nach Anspruch 2, wobei die erste Höhe (H1) gleich der fünften Höhe (H5) ist und die zweite Höhe (H2) gleich der sechsten Höhe (H6) ist.

4. Der Amboss (402) nach einem der Ansprüche 1 bis 3, wobei der Amboss (402) ferner eine Aussparung (434) umfasst, die im Mittelabschnitt (424) angeordnet ist und sich entlang einer zweiten Achse (A2) des Ambosses (402) erstreckt.

5. Der Amboss (402) nach einem der Ansprüche 1 bis 4, wobei eine Breite des ersten Übergangsabschnitts (422), eine Breite des zweiten Übergangsabschnitts (426) und eine Breite des Mittelabschnitts (424) auf der Grundlage einer Breite des Längsversiegelungsabschnitts festgelegt sind.

6. Ultraschall-Siegelvorrichtung (200) zum Quersiegeln eines Quersiegelabschnitts (302) eines Schlauchs (112) aus Verpackungsmaterial, wobei der Quersiegelabschnitt (302) einen ersten Querrandabschnitt (304), einen Längssiegelabschnitt (LS) (306) und einen zweiten Querrandabschnitt (308) umfasst, wobei das Ultraschall-Siegelungssystem (200) umfasst:
eine Ultraschallerzeugungsvorrichtung (400), die so angeordnet ist, dass sie Ultraschallschwingungen in einen Quersiegelabschnitt des Schlauchs (112) überträgt, wobei die Ultraschallerzeugungsvorrichtung (400) eine Sonotrode (406) und eine Klemmeinheit (408) umfasst;
und einen Amboss (402) gemäß Anspruch 1, der so angeordnet ist, dass er der Ultraschallerzeugungsvorrichtung (400) gegenüberliegt.

7. Ultraschall- Siegelvorrichtung (200) nach Anspruch 6, wobei im ersten Übergangsabschnitt (422) der Rippe (410) und die Auflagefläche (412) über eine erste Breite (W1) des ersten Übergangsabschnitts (422) von einer jeweiligen ersten und zweiten Höhe (H1, H2) des ersten Seitenabschnitts (420) auf eine jeweilige dritte und vierte Höhe (H3, H4) des Mittelabschnitts (424) übergehen,
wobei im zweiten Übergangsabschnitt (426) die Rippe (410) und die Auflagefläche (412) über eine zweite Breite (W2) des zweiten Übergangsabschnitts (426) von der jeweiligen dritten und vierten Höhe (H3, H4) des Mittelabschnitts (424) zu einer jeweiligen fünften und sechsten Höhe (H5, H6) des zweiten Seitenabschnitts (428) übergehen, und
wobei die erste Breite (W1) des ersten Übergangsabschnitts (422) kleiner ist als die zweite Breite (W2) des zweiten Übergangsabschnitts (426).

8. Ultraschall-Siegelvorrichtung (200) nach Anspruch 6 oder 7, wobei die Rippe (410) so angeordnet ist, dass sie der Sonotrode (406) der Ultraschallerzeugungsvorrichtung (400) zugewandt ist, und
wobei die Auflagefläche (412) und die Ablösefläche (414) so angeordnet sind, dass sie der Klemmeinheit (406) der Ultraschallerzeugungsvorrichtung (400) zugewandt sind.

9. Ultraschall- Siegelvorrichtung (200) nach einem der Ansprüche 6 bis 8, wobei eine Oberfläche (430) der Sonotrode (406) und eine zum Amboss (402) hin angeordnete Oberfläche (432) der Klemmeinheit (408) in derselben Ebene liegen.

10. Ultraschall- Siegelvorrichtung (200) nach einem der Ansprüche 6 bis 9, wobei die Klemmeinheit (408) federbelastet ist.

11. Ultraschall- Siegelvorrichtung (200) nach einem der Ansprüche 6 bis 10, wobei die Auflagefläche (412) und/oder die Ablösefläche (414) und/oder eine Fläche (432) der Klemmeinheit (408) mit einem elastischen Material versehen ist.

12. Verpackungsmaschine (100) mit einer Quersiegelstation (TS) (114) zum Quersiegeln und Schneiden einer Hülse aus Verpackungsmaterial (112) in Verpackungen (116), wobei die TS-Station (114) ein Ultraschall-Siegelvorrichtung (200) gemäß einem der Ansprüche 6 bis 11 umfasst.

13. Verpackungsmaschine (100) nach Anspruch 12, wobei der Mittelabschnitt (424) so ausgebildet ist, dass er während eines Quersiegelzustands mit mindestens dem LS-Abschnitt (418) der Schlauchbahn zusammenwirkt, und
wobei der erste und der zweite Seitenabschnitt (420, 428) so ausgebildet sind, dass sie während des Querversiegelungszustands jeweils mit mindestens dem ersten und dem zweiten Querrandabschnitt (304, 308) der Schlauch (112) zusammenwirken.

14. Verfahren (800) zum Querverschweißen eines Schlauchs (112) aus Verpackungsmaterial unter Verwendung eines Ultraschall- Siegelvorrichtungs (200) gemäß einem der Ansprüche 6 bis 11, wobei das Verpackungsmaterial eine Kartonschicht und eine an der Kartonschicht befestigte Kunststofffolie umfasst, wobei das Verfahren (800) umfasst:
Bereitstellen (S802) eines Quersiegelabschnitts (302) der Schlauch (112) aus Verpackungsmaterial zwischen der Ultraschallerzeugungsvorrichtung (400) und dem Amboss (402) des Ultraschallsiegelungssystems (302),
Erzeugen (S804) von Ultraschallschwingungen unter Verwendung der Sonotrode (406) der Ultraschallerzeugungsvorrichtung (400), so dass die Kunststofffolie des Verpackungsmaterials im Quersiegelabschnitt (302) zumindest teilweise schmilzt, und
Zusammenpressen (S806) des Schlauchs (112) im Quersiegelabschnitt (302) zwischen der Ultraschallerzeugungsvorrichtung (400) und dem Amboss (402), so dass über dem Quersiegelabschnitt (302) ein Druck entsteht, der bewirkt, dass die Kunststofffolie miteinander verbunden wird, wodurch eine Quersiegelung gebildet wird.

## Revendications

1. Enclume (402) d'un système de scellage par ultrasons (200) destinée à sceller transversalement une section de scellage transversale (302) d'un tube (112) en matériau d'emballage, dans laquelle la section de scellage transversale (302) comprend une première section de bord transversale (304), une section de scellage longitudinale (LS) (306) et une deuxième section de bord transversale (308), ledit enclume (402) comprenant :
une nervure (410) s'étendant le long d'un premier axe (A1) de l'enclume (402),
une surface de libération (414) s'étendant le long du premier axe de l'enclume (402), et
une surface d'appui (412) s'étendant le long du premier axe de l'enclume (402) et disposée entre la nervure (410) et la surface de libération (414),
dans lequel l'enclume (402) comprend une première et une deuxième sections latérales (420, 428), une section médiane (424), une première section de transition (422) disposée entre la première section latérale (420) et la section médiane (424), et une deuxième section de transition (426) disposée entre la section médiane (424) et la deuxième section latérale (428),
dans lequel, dans les première et deuxième sections latérales (420, 428), la nervure (410), la surface de libération (414) et la surface d'appui (412) suivent un premier profil (416),
dans laquelle, dans la section médiane (424), la nervure (410), la surface de libération (414) et la surface d'appui (412) suivent un deuxième profil (418),
dans lequel la hauteur de la nervure (410) et de la surface d'appui (412) dans le premier profil (416) est supérieure à la hauteur correspondante dans le deuxième profil (418), et la hauteur de la surface de libération (414) dans le premier profil (416) est identique à celle du deuxième profil (418).

2. Enclume (402) selon la revendication 1, dans laquelle, dans la première section de transition (422), la nervure (410) et la surface d'appui (412) passent d'une première et d'une deuxième hauteurs respectives (H1, H2) de la première section latérale (420) à une troisième et une quatrième hauteurs respectives (H3, H4) de la section médiane (424) sur une première largeur (W1) de la première section de transition (422),
dans laquelle, dans la deuxième section de transition (426), la nervure (410) et la surface d'appui (412) passent des troisième et quatrième hauteurs respectives (H3, H4) de la section médiane (424) à des cinquième et sixième hauteurs respectives (H5, H6) de la deuxième section latérale (428) sur une deuxième largeur (W2) de la deuxième section de transition (426),
dans lequel la première largeur (W1) de la première section de transition (422) est inférieure à la deuxième largeur (W2) de la deuxième section de transition (426).

3. Enclume (402) selon la revendication 2, dans laquelle la première hauteur (H1) est identique à la cinquième hauteur (H5), et la deuxième hauteur (H2) est identique à la sixième hauteur (H6).

4. Enclume (402) selon l'une quelconque des revendications 1 à 3, dans laquelle l'enclume (402) comprend en outre un évidement (434) disposé dans la section médiane (424) et s'étendant le long d'un deuxième axe (A2) de l'enclume (402).

5. Enclume (402) selon l'une quelconque des revendications 1 à 4, dans laquelle la largeur de la première section de transition (422), la largeur de la deuxième section de transition (426) et la largeur de la section médiane (424) sont définies en fonction de la largeur de la section de scellage longitudinale.

6. Système de scellage par ultrasons (200) destiné à sceller transversalement une section de scellage transversale (302) d'un tube (112) en matériau d'emballage, dans lequel la section de scellage transversale (302) comprend une première section de bord transversale (304), une section de scellage longitudinale (LS) (306) et une deuxième section de bord transversale (308), le système de scellage par ultrasons (200) comprenant :
un dispositif générateur d'ultrasons (400) agencé pour transmettre des vibrations ultrasonores dans une section de scellage transversale du tube (112), dans lequel le dispositif générateur d'ultrasons (400) comprend une sonotrode (406) et une unité de serrage (408) ;
et une enclume (402) selon la revendication 1, agencée pour faire face au dispositif générateur d'ultrasons (400).

7. Système de scellage par ultrasons (200) selon la revendication 6, dans lequel, dans la première section de transition (422), la nervure (410) et la surface d'appui (412) passent d'une première et d'une deuxième hauteur respectives (H1, H2) de la première section latérale (420) à une troisième et une quatrième hauteur respectives (H3, H4) de la section médiane (424) sur une première largeur (W1) de la première section de transition (422),
dans laquelle, dans la deuxième section de transition (426), la nervure (410) et la surface d'appui (412) passent des troisième et quatrième hauteurs respectives (H3, H4) de la section médiane (424) à des cinquième et sixième hauteurs respectives (H5, H6) de la deuxième section latérale (428) sur une deuxième largeur (W2) de la deuxième section de transition (426), et
dans lequel la première largeur (W1) de la première section de transition (422) est inférieure à la deuxième largeur (W2) de la deuxième section de transition (426).

8. Système de scellage par ultrasons (200) selon la revendication 6 ou 7, dans lequel la nervure (410) est agencée de manière à faire face à la sonotrode (406) du dispositif générateur d'ultrasons (400), et
dans lequel la surface d'appui (412) et la surface de libération (414) sont agencées de manière à faire face à l'unité de serrage (406) du dispositif générateur d'ultrasons (400).

9. Système de scellage par ultrasons (200) selon l'une quelconque des revendications 6 à 8, dans lequel une surface (430) de la sonotrode (406) et une surface (432) de l'unité de serrage (408) disposée vers l'enclume (402) se trouvent dans un même plan.

10. Système de soudage par ultrasons (200) selon l'une quelconque des revendications 6 à 9, dans lequel l'unité de serrage (408) est actionnée par ressort.

11. Système de scellage par ultrasons (200) selon l'une quelconque des revendications 6 à 10, dans lequel la surface d'appui (412) et/ou la surface de libération (414) et/ou une surface (432) de l'unité de serrage (408) est pourvue d'un matériau élastique.

12. Machine d'emballage (100) comprenant une station de scellage transversal (TS) (114) destinée à sceller et à découper transversalement un tube de matériau d'emballage (112) en emballages (116), dans laquelle la station TS (114) comprend un système de scellage par ultrasons (200) selon l'une quelconque des revendications 6 à 11.

13. La machine d'emballage (100) selon la revendication 12, dans laquelle la section médiane (424) est configurée pour interagir avec au moins la section LS (418) du tube pendant un état de scellage transversal, et
dans laquelle les première et deuxième sections latérales (420, 428) sont configurées pour interagir respectivement avec au moins les première et deuxième sections de bord transversales (304, 308) du tube (112) pendant l'état de scellage transversal.

14. Procédé (800) pour sceller transversalement un tube (112) en matériau d'emballage à l'aide d'un système de scellage par ultrasons (200) selon l'une quelconque des revendications 6 à 11, dans lequel le matériau d'emballage comprend une couche de carton et une feuille de plastique fixée à la couche de carton, le procédé (800) comprenant :
la mise en place (S802) d'une section de scellage transversal (302) du tube (112) en matériau d'emballage entre le dispositif générateur d'ultrasons (400) et l'enclume (402) du système de scellage par ultrasons (302),
générer (S804) des vibrations ultrasoniques à l'aide de la sonotrode (406) du dispositif générateur d'ultrasons (400), de telle sorte que la feuille de plastique du matériau d'emballage dans la section de scellage transversale (302) fonde au moins partiellement, et
presser (S806) le tube (112) dans la section de scellage transversal (302) entre le dispositif générateur d'ultrasons (400) et l'enclume (402), de telle sorte qu'une pression s'exerce sur la section de scellage transversal (302), provoquant la liaison de la feuille de plastique, formant ainsi un scellage transversal.
